(19) Europäisches Patentamt

European Patent Office

Office européen des brevets

(11) **EP 1 023 347 B1**

(12) **EUROPEAN PATENT SPECIFICATION**

(45) Date of publication and mention
of the grant of the patent:
**29.12.2004 Bulletin 2004/53**

(21) Application number: **98946559.6**

(22) Date of filing: **06.10.1998**

(51) Int Cl.$^7$: **C08F 257/02**, C08F 12/08

(86) International application number:
**PCT/GB1998/002985**

(87) International publication number:
**WO 1999/019375 (22.04.1999 Gazette 1999/16)**

(54) **METHOD OF PRODUCTION OF PARTICULATE POLYMERS**

VERFAHREN ZUR HERSTELLUNG VON POLYMERTEILCHEN

PROCEDE DE FABRICATION DE POLYMERES EN PARTICULES

(84) Designated Contracting States:
**AT BE DE ES FI FR GB IT NL SE**

(30) Priority: **10.10.1997 GB 9721603**
**05.05.1998 US 72859**

(43) Date of publication of application:
**02.08.2000 Bulletin 2000/31**

(73) Proprietor: **Polymer Systems AS**
**2001 Lillestroem (NO)**

(72) Inventors:
• **MORK, Preben, Cato**
**N-7027 Trondheim (NO)**

• **TOGERSEN, Svein**
**N-1170 Oslo (NO)**

(74) Representative: **Cockbain, Julian, Dr. et al**
**Frank B. Dehn & Co.,**
**European Patent Attorneys,**
**179 Queen Victoria Street**
**London EC4V 4EL (GB)**

(56) References cited:
**DE-A- 1 917 090**      **GB-A- 1 416 405**

## Description

Field of the Invention

This invention relates to improvements in the production of particulate polymers, in particular expandable polystyrene (EPS).

Background of the Invention

Millions of tonnes of expandable polystyrene are produced each year. The EPS is produced in bead form and is used for the manufacture of a wide range of products ranging for example from thin-walled cups to packaging materials to large blocks used in construction.

The different end uses require EPS beads of different sizes, typically as follows:

200 - 600 µm - Cups and trays
400 - 800 µm - Thin-walled packaging materials
600 - 1100 µm - Normal packaging materials
900 - 2000 µm - Insulation boards and block materials.

EPS beads falling outside these target size ranges are typically considered to be "off-specification" material and command substantially lower prices.

EPS is normally produced by a suspension polymerization process in which styrene is polymerized in the presence of a free radical generator. The polystyrene (PS) beads produced in this way are impregnated with a blowing agent, typically a $C_{3-6}$ hydrocarbon such as pentane, to produce the expandable polystyrene (EPS) beads.

Suspension polymerization however produces PS beads with a broad size distribution and the PS or EPS beads must be size-classified, i.e. separated into fractions having the appropriate particle size range for the desired end use.

Although variation of the suspension polymerization conditions may allow the EPS producer to optimize the fraction of polymer beads having the particular desired size, e.g. for thin-walled packaging materials, a large proportion of the total bead yield will still be in less desired grades or will be of off-specification sizes.

Sekisui, in GB-A-1416405, describe a process in which the suspension polymerization of styrene is effected in the presence of polystyrene seeds of a size smaller than the desired mode size of the end product.

Typically the Sekisui process may be performed as a two-stage suspension polymerization. The first stage is terminated when relatively small beads, e. g. having a mode size of about 900 µm, have been formed. The small beads are then graded to remove overly small and overly large fractions leaving PS seeds, e.g. having sizes of 400 to 1800 µm, and the seeds are then used in the second of the suspension polymerization stages to yield PS beads having a narrower size distribution about the desired particle size than is achieved in the conventional suspension polymerization. Even this process however yields a product which has a broad particle size distribution and the complexity of the grading procedure is increased since it must be carried out on the smaller particles produced in the first polymerization stage.

The grades of EPS produced by the conventional and Sekisui processes contain a range of particle sizes, e.g. particle diameters differing by several hundreds of micrometers. This has a deleterious effect on the processing of EPS beads into expanded polystyrene products.

In expanded polystyrene product formation, EPS beads are first pre-expanded to produce free flowing expanded particles, typically using steam at a temperature below 100°C, and then tempered in a silo through which air is passed, before being filled into a mould and steamed, typically at 110 to 120°C, to complete expansion and fusion of the particles.

The tempering period is required for the pre-expanded particles to develop the necessary resilience for the moulding process.

The particle size distribution in the EPS beads is not simply replicated in the pre-expanded beads, instead the size discribution is broadened and a broad density distribution is created as under the same conditions the smaller EPS beads will expand less and the larger beads more leading to the tempering silo containing a mixture which includes small high density particles and larger low density particles. Settling out of the smaller higher density particles occurs in the tempering silo resulting in non-uniformity of the pre-expanded particle mixture fed from the silo to the moulds and accordingly to variations in the final densities and strengths of the moulded products. Thus the broad particle size distribution for the graded EPS beads and hence of the pre-expanded particles leads to difficulties in production of expanded polystyrene products and makes the product quality inconsistent and difficult to control.

We have now found that it is possible to produce substantially monodisperse (i.e. single sized) polymeric seed particles which can be used in suspension polymerization to generate larger but still substantially monodisperse polymer particles, for example substantially monodisperse EPS particles with a size suitable for one of EPS's typical end uses.

Since the product is substantially monodisperse, mechanical grading is not required thereby leading to considerable savings in terms of production equipment and process duration. Moreover undesired grades are not produced thereby leading to a considerable increase in effective yield and a reduction in waste. Furthermore the problems associated with a broad particle size range within a graded EPS product are avoided or reduced.

## Summary of the Invention

Viewed from one aspect the invention provides .a substantially monodisperse particulate polymer material, e.g. a suspension polymerization product, having a mode particle size of between 60 and 400 µm, and a CV of less than 12% (preferably no more than 10% and more preferably no more than 5%), and optionally with the proviso that where the mode particle size is above 200 µm the polymer material is a styrenic material, e.g. a polystyrene.

Viewed from another aspect the invention provides a process for the preparation of polymer particles of a first mode size which is in the range 200 to 3000 µm, which process comprises:

(a) obtaining a first substantially monodisperse particulate polymer seed material having a mode size of no more than 100 µm, preferably no more than 60 µm, more preferaby no more than 50 µm;

(b) using said first seed material, performing a suspension polymerization to yield a second substantially monodisperse particulate polymer seed material having a mode size greater than that of said first seed material and not more than 150 µm, preferably not more than 100 µm and more preferably not more than 80 µm and isolating said second seed material;

(c) using said second seed material, performing a suspension polymerization to yield a third substantially monodisperse particulate polymer seed material having a mode size greater than that of said second seed material and not more than 1000 µm and isolating said third seed material;

(d) using said third seed material or a seed material derived therefrom, performing a suspension polymerization to yield polymer particles of said first mode size; and

(e) optionally impregnating and/or heat treating and/or surface modifying the particulate product of step (d).

In this process, one or more of steps (b), (c) and (d) may, but preferably do not, involve removal of over- or under-sized particles from the seed material so produced so as to yield a substantially monodisperse seed material.

Viewed from a further aspect the invention also provides a process for the preparation of polymer particles by successive seeded suspension polymerization, characterised in that as seeds are used polymer particles having a CV of less than 12% and a mode particle size of between 60 and 1000 µm (preferably between 100 and 800 µm and more preferably 300 to 700 µm) and in that polymerization is so effected that the ratio of the mode particle size of the seeds to that of the suspension polymerization product is in the range 1:1.4 to 1:3, preferably 1:1.58 to 1:2.72, more preferably 1:1.81 to 1:2.47.

## Brief description of the drawings

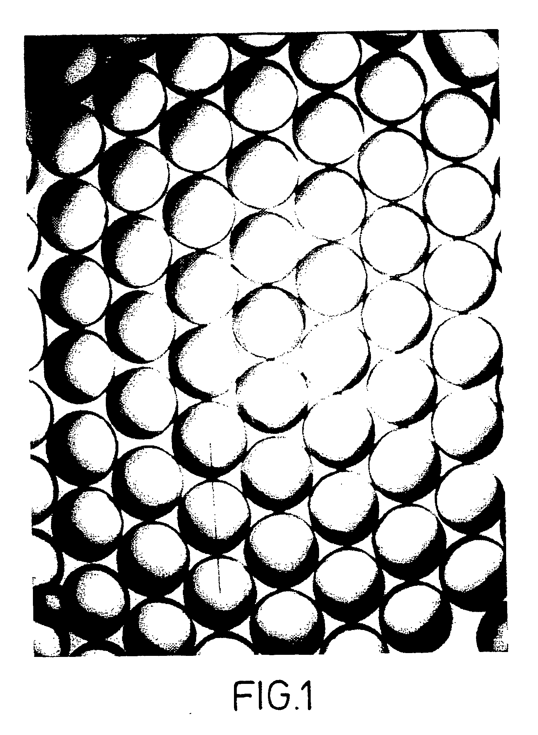

Light microscope images of polymer particles produced by the process of the invention are shown in Figures 1 to 3 of the accompanying drawings.

## Detailed description of the invention

The total number of suspension polymerization stages used in the processes of the invention will typically be up to 12, preferably up to 8. Typically transition from below 50 µm to above 500 µm will require more than one stage, generally two or more preferably three or four stages. Conveniently, for seeds having sizes above 100 µm the particle volume growth per stage will be at least x 2.74, e.g. at least x 4, and less than x30, preferably from x5 to x15. For seeds having sizes below 100 µm, the particle volume growth per stage will preferably be between x 2.74 and x50, e.g. x4 to x40 more preferably between x5 and x30, especially preferably x6 to x15, e.g. about x8.

If desired, a mixture of two or more populations of substantially monodisperse seeds having different mode diameters may be used in the present invention to produce a multimodal, preferably a bimodal, end product which can be graded relatively straightforwardly to produce different substantially monodisperse grades, e.g. corresponding to EPS grades preferred for different end uses. Where a bimodal product is produced for use without further size classification, it is preferred that the particle size of the smaller beads be comparable to (e. g. within 15% of) the diameter of the largest spheres which would fit into the void space between the larger beads when in close packed arrangement. Such a bimodal product is novel and forms a further aspect of the invention.

The processes of the invention are especially suitable for the production of EPS beads, but the processes may be used for the preparation of any particulate polymer producible by suspension polymerization, in particular styrenic homo- and copolymers and vinyl homo- and copolymers. Examples of appropriate monomers include vinyl aliphatic monomers such as esters of acrylic and methacrylic acids, acrylonitrile, and vinyl aromatic monomers such as styrene and substituted styrenes.

By mode particle size is meant the peak particle size for detectable particles, observed in the particle size distribution determined using particle size determination apparatus such as a Coulter LS 130 particle size analyzer e.g. a mode particle size in the distribution of particle size against percentage of total particle volume.

By substantially monodisperse it is meant that for a plurality of particles (e.g. at least 100, more preferably at least 1000) the particles have a coefficient of variation (CV) of less than 20%, for example less than 15%, preferably less than 12%, more preferably less than 11%, still more preferably less than 10% and most preferably no more than about 8%. CV is determined in percentage as

$$CV = \frac{100 \times \text{standard deviation}}{\text{mean}}$$

where mean is the mean particle diameter and standard deviation is the standard deviation in particle size. CV is preferably calculated on the main mode, ie. by fitting a monomodal distribution curve to the detected particle size distribution. Thus some particles below or above mode size may be discounted in the calculation which may for example be based on about 90% of total particle number (of detectable particles that is). Such a determination of CV is performable on a Coulter LS 130 particle size analyzer.

The degree of monodispersity required for the seeds and enlarged particles of each enlargement stage tends to vary as enlargement progresses. For the initial and early stage seeds, a high degree of monodispersity is desirable and grading of the product may also be desirable. Thus in general if the product of a polymerization stage has a CV of about 25%, it will preferably be graded to produce a seed having a CV of less than 25%, preferably less than 20% for the subsequent stage. For seeds having a mode size of less than 150 $\mu$m, the CV is especially preferably below 5%. For seeds having a mode size of greater than 150 $\mu$m the CV is preferably at or below about 10%.

The separate polymerization stages in the processes of the invention are characterized by being carried out in different reactor chambers or by being carried out in the same reactor chamber but with addition of further monomer and desirably also further suspension medium. The further monomer is preferably added continuously until the desired amount of monomer has been added. This addition may be at a constant rate but more preferably the rate of addition is increased as addition progresses, with the increase being either gradual or stepwise.

The initial substantially monodisperse polymer seed material used for the processes of the invention may conveniently be produced by any process which yields a substantially monodisperse polymer product, e. g. by a dispersion polymerization process performed in an organic solvent or, more preferably, by the Sintef process described for example in US-A-4336173 and US-A-4459378. Monodisperse polymer particles produced by the Sintef process are sold commercially by Dyno Particles AS of Norway under the trade name Dynospheres®, typically with mode particle sizes in the range 2 to 30 $\mu$m.

The Sintef process is an "activated swelling" process rather than a suspension polymerization because polymerization is only initiated after all the monomer has been absorbed into the starting polymer seeds. In contrast, as described herein, in a seeded suspension polymerization the growing seed is continuously contacting fresh monomer and initiator.

Less preferably, the initial polymer seed material may be produced by a process which yields a polydisperse product, e.g. a conventional suspension polymerization process, with the polydisperse product then being size separated to yield a substantially monodisperse particle population.

The initial monodisperse particles may be transformed into larger substantially monodisperse polymer seeds by a suspension polymerization process substantially as described in US-A-5147937 (Frazza), with the number and duration of the individual polymerization stages being selected to yield a final substantially monodisperse seed product of the desired mode particle size. In general the desired mode particle size for the final seed product will conform to a size from which the final suspension polymerization product may be produced with the desired median particle size in one, or less preferably more than one, polymerization stages in a single reactor. Thus final seed mode sizes may typically be within ± 10% of 170 $\mu$m, 340 $\mu$m, 600 $\mu$m and 925 $\mu$m for the manufacture of final product beads of mode sizes 400, 600, 1000 and 1300 $\mu$m, i.e. suitable for use as different grades of EPS beads for example.

It is particularly surprising that the substantial monodispersity of the particles is maintained despite the degree of particle growth that occurs, e.g. multistage growth from initial micron-sized Sintef particles up to millimeter sized end product.

It has been found that this multistage growth is advantageous since the polymerization process conditions can be separately optimized for each growth stage, and it allows the final growth stage to be effected using process conditions and controls conventional in the suspension polymerization production of millimeter sized particles.

The performance of the Sintef process to generate micron sized initial seeds is relatively time consuming and expensive and the time and expense rises steeply as the size of the particles increases. The commercially available Sintef particles are moreover too small to be used in a single step suspension polymerization to produce EPS particles of commercial grades and accordingly such particles did not represent an obvious candidate for use as polymer seeds for EPS, in part due to expense and in part due to the expectation that monodispersity would be lost during the growth process. However, using multistage suspension polymerization to achieve the growth process, not only is the monodispersity substantially retained but also the expense of the Sintef process is diluted - thus a 1g of a 20 $\mu$m Sintef product can be transformed into about 275 kg of a 1300 $\mu$m end product.

The processes and products of the invention will now be described in further detail using by way of example the styrene polymerization system. However, as indicated above, while EPS is a particularly important product, the processes are applicable to other polymers and products.

The initial seed particles used are preferably polystyrene particles such as Dynospheres® (Dyno Particles AS, Lillestrøm, Norway) produced by the Sintef process, particularly preferably particles having a mode size in the range 0.5 to 50 µm, especially 5 to 30 µm, and most especially about 10-20 µm. Alternatively they may be size fractionated polystyrene particles produced by standard emulsion polymerization procedures, e.g. having a mode size of 0.05 to 1.0 µm, or polystyrene particles having a mode size of up to 20 µm, more particularly 1 to 10 µm, produced by dispersion polymerization in an organic solvent. The initial seed particles may then be enlarged in a stepwise suspension polymerization process substantially as described in US-A-5147937 to produce final seed particles having a mode size of up to 1000 µm.

This process involves combining an aqueous dispersion of the seed particles with an aqueous emulsion of a water-insoluble monomer or monomer mixture and an oil soluble free radical polymerization initiator or a precursor thereof at such a rate that an amount of monomer or monomer mixture equal to the total initial seed polymer weight is combined with the dispersion over a period of 45 to 120, preferably 60 to 90, minutes. The combination is preferably effected at a temperature at least as high as that at which the initiator or precursor is activated and the reaction mixture is maintained at a temperature at which the initiator or precursor is activated until the seeds have grown by the desired amount, suitably until the monomer is exhausted. The procedure is then repeated until the final desired particle size is achieved. Particularly preferably, the monomer content of the reaction mixture is maintained at no more than 20%, more preferably no more than 10%, by weight of the polymer content at any given time.

Preferably each growth stage increases the particle volume by 1.1x to 50x, especially 2x to 30x, more preferably 4x to 20x, and most preferably 6x to 15x. Indeed stages preferably involve a volume increase of no more than 15x (ie. no more than a fifteen-fold volume increase).

The monomer used may be pure styrene or styrene derivative or may alternatively be a mixture of a styrene and/or a styrene derivative and optionally a non-styrenic comonomer, e.g. a conventional styrene comonomer. Styrene and styrene derivatives such as alkyl styrenes (e.g. $C_{1-3}$-alkyl styrenes such as o-methyl styrene, m-methyl-styrene, p-methyl-styrene, dimethyl styrene, ethyl styrene, ethyl-methyl-styrene, etc.) and halo styrenes (e.g. p-chlorostyrene or 2,4-dichlorostyrene), and other conventional or nonconventional styrenes may be used to produce homopolymers or copolymers. In general however styrenes and styrene in particular will preferably be the predominant or indeed the only monomer used for growth from the seed particles.

Other comonomers which may be used include ethylenically unsaturated monomers for example acrylic acids and esters (such as acrylic acid, methyl acrylate, ethyl acrylate, butylacrylate, methacrylic acid, methyl methacrylate and ethyl methylmethacrylate), maleic acid and esters thereof (e.g. dimethyl maleate, diethyl maleate and dibutyl maleate), fumaric acids and esters thereof (e.g. dimethyl fumarate and diethyl fumarate), vinyl monomers, and acrylonitrile.

Non styrenic comonomers will preferably make up 0% or 1 to 40% by weight of the polymer added in any growth stage.

The seed particles are preferably of a polymer analogous to or at least compatible with the polymer added during the growth stage for which the polymer seed is used. Thus the Sintef seeds are preferably predominantly styrenic polymers, especially on the surfaces thereof.

Besides simple ethylenic comonomers, comonomers which are capable of cross-linking can also be used, for example divinyl benzene and polyethylene glycol dimethacrylate. Such cross-linkable comonomers will generally be used in relatively small amounts.

Examples of suitable polymerization initiators include organic peroxides such as dibenzoyl peroxide, and lauroyl peroxide, peroxy esters such as t-butyl peroxybenzoate and t-butyl peroxypivalate and azo compounds such as azo bis isobutyronitrile and azo bisdimethylvaleronitrile. These may be used in conventional concentrations (e.g. 0.1 to 10%, preferably 0.2 to 4% by weight relative to the monomer), and are preferably added in solution in the monomer or monomer mixture or in an inert organic solvent, e.g. benzene, toluene or dichloropropane. Where an organic solvent is used, this is preferably in a minor amount relative to the polymer content.

It is preferred to use at least one oil soluble polymerization inhibitor which is disposed in the monomer or monomer mixture in order to prevent polymerization in the seed-free monomer droplets and thereby nucleation of new particles. Such an inhibitor preferably has a high molecular weight (e.g. at least 300 dalton) and low-water-solubility to reduce diffusion through the water phase. The inhibitor may for example be a phenolic compound (such as 3,5-di-tert-butyl-4-hydroxytoluene, 1,1-bis(4-hydroxyphenyl)cyclohexane, 4,4-butylidene-bis(3-methyl-6-t.butyl phenol), 1,3,5-trimethyl-2,4,6-tris-(3,5-di-t.butyl-4-hydroxybenzyl)benzene (available as Irganox 1330), 2,2'-methylenebis(6-t. butyl-4-methyl phenol), a sulphur compound (such as dilaurylthiodipropionate, 4,4'-thiobis(3-methyl-6-t.butyl-phenol)), or an amine (such as N,N'-di-β-naphthyl-p-phenylenediamine and N-phenyl-N-isopropyl-p-phenylenediamine).

The inhibitor is conveniently used in quantities of 0.5 to 10%, preferably 1 to 5% by weight relative to the initiator.

As with conventional suspension polymerizations, it is also preferred to include one or more stabilizers in the reaction medium. It is particularly preferred to include a suspension stabilizer in the aqueous seed suspension and an emulsion stabilizer in the aqueous monomer emulsion which is added thereto. Examples of suitable stabilizers include ionic, ethoxylated ionic, non-ionic and polymeric amphiphilic molecules and inorganic particles, e.g. water-soluble high molecular weight materials, celluloses (including cellulose ethers for example hydroxyalkyl methylcelluloses such as hydroxypropylmethyl celluloses, available for example as Methocel K-100), polyols, polyvinylalcohols, polyalkylene oxides and inorganic materials such as calcium phosphate and magnesium pyrophosphate.

Thus for example emulsion stabilizers such as nonylphenol-polyethylene oxides containing 20 to 150 ethylene oxide units, may be used, e.g. Berol 274 or Igepal CO 990. Alternatively but less desirably ionic or ethoxylated ionic surfactants may be used. These stabilizers are preferably present in the monomer emulsion, e.g. at concentrations of 0.1 to 2%, preferably 0.2 to 1.0% by weight relative to the monomer content. Moreover the aqueous bead suspension will preferably contain a stabilizer such as a cellulose or cellulose ether or an inorganic stabilizer such as a phosphate (e.g. tricalcium phosphate). Preferably the suspension stabilizer used in the final polymerization stage or stages is an inorganic solid particulate which can readily be removed from the product in a washing step. Suspension stabilizers will generally be used at 0.5 to 15% by weight relative to the seed, more preferably 1 to 10%, especially 1 to 6% for inorganic particulates.

Typically seed preparation from smaller seeds may be effected in a reactor (e.g. a 1.5L to 10L autoclave reactor) equipped with stirrer, inlet and outlet ports and temperature controls.

The reactor is charged with initial or later stage seeds, suspension stabilizer, deionized water and when the seed is small (e.g. below 50 μm, especially below 30 μm) preferably also a water-soluble inhibitor such as sodium nitrate. Where an inhibitor is used in the early stages of particle growth this will typically be used at 0.001 to 0.005% by weight concentration in the water.

The seed is typically 10 to 60% by weight of the aqueous suspension and the stabilizer typically 0.5 to 15%, preferably 1 to 10% by weight relative to the seed.

The temperature of the seed suspension is typically raised to about 70 to 100°C, preferably 78 to 92°C and a monomer emulsion is added.

The monomer emulsion is typically prepared by dissolving the oil-soluble initiator and the oil soluble inhibitor (e.g. dibenzoyl peroxide and Irganox 1330) in the styrene monomer (or monomer mixture) and mixing with an aqueous solution of an emulsion stabilizer (e.g. Berol 274 or Igepal CO 990). The oil (monomer) phase desirably makes up 30 to 60% by weight of the monomer emulsion which is prepared by any convenient emulsification technique, e.g. by use of a rotor-stator such as an Ultra-Turax.

Insofar as emulsification is concerned it is particularly important for smaller seeds to ensure that the monomer emulsion droplet size is small, and in general it is preferred that the monomer emulsion droplets should be smaller than the seed particles used in any given stage.

Accordingly, it is preferred to form the emulsion by passing the mixture through a plurality of rotor-stator stages, e.g. by using a rotor stator with interlocking radially separated concentric cylindrical flanges and grooves with the emulsion passing outward through slots in the cylindrical flanges and each flange thereby creating a separate shear force zone. In this way the production of oversized droplets is minimized. Alternatively the mixture may be passed sequentially through a series of separate rotor-stators or repeatedly cycled through a single rotor-stator mixer.

The emulsion is then conveniently fed continuously into the stirred suspension in the reactor, preferably using an adjustable feed rate pump. The feed rate is preferably kept at 0.1 to 2.0g, especially 0.2 to 1.5g and more especially about 0.5g, monomer/hour per gram of polymer in the reactor, i.e. the emulsion feed rate is preferably increased during the period of addition. Once monomer addition is complete, the reaction mixture is stirred until monomer is exhausted, e.g. for about 2 hours, or polymerization is brought to an end by addition of a chaser (ie. a monomer composition with a high concentration of initiator).

At the end of each such polymerization stage, particle sizes are preferably determined (using a Coulter counter) and the quantities of monomer used in any subsequent stage calculated accordingly.

Where a polymerization stage is found to produce an undesirably large particle size distribution, the volume size increase should be reduced for subsequent performances of the same growth stage. However the product may still be used for further growth stages if it is graded to remove overly small or overly large particles.

After polymerization is complete, the enlarged particles may be removed and if desired washed to remove undesired stabilizers, initiator etc.

The stability of the polymerization suspension, and the molecular weight of the polymer produced depend on a range of variables (e.g. rate of monomer addition, initiator concentration, temperature, emulsion droplet size, seed size, etc.) in different ways.

Stability requires the avoidance of coagulation. This can typically be assured by ensuring that the monomer concentration in the seed particles does not exceed about 20-25% by weight, more preferably it does not exceed about 10 to 20% and especially preferably it does not exceed about 10% by weight. Avoidance of excess monomer concentration can be achieved by increasing initiator concentration (although this reduces the molecular weight of the polymer formed, the viscosity of the polymer and its glass transition temperature) or by reducing the rate of monomer addition (which increases polymer molecular weight and reaction time). Essentially therefore the operation of the process must balance initiator concentration and monomer addition rate to avoid coagulation and achieve the desired molecular weight within an acceptable process time.

The water contents of the phases may be varied generally without serious problems although if the suspension phase has too low a water content stability may be lost.

Likewise emulsifier, ie. emulsion stabilizer, content is generally not critical, although if too low stability is lost, and if too high micelle formation and hence fines formation may occur. In general the process of the invention may be operated with less than about 1% by weight fines being produced.

From a starting point of typically 10-20 µm Dynospheres®, magnification to full sized particles of for example 200 to 1300 µm mode size may typically be effected in 5 or more stages, e.g.

Stage 1 - 20 to 40 µm
Stage 2 - 40 to 80 µm
Stage 3 - 80 to 200 µm
Stage 4 - 200 to 400 µm
Stages 5 et seq. - 400 to 600 or up to 1300 µm

To produce EPS beads, the PS beads must be loaded with a blowing agent, ie. a material which is not a solvent for the polymer or which only slightly swells it and has a boiling point lower than the softening point of the polymer and is in gaseous or liquid form at ambient temperatures. Typically an optionally substituted aliphatic hydrocarbon having up to 8 carbons, preferably 3 to 5 carbons, and a boiling point in the range -50 to +50°C is used, e.g. propane, pentane, cyclopentane, cyclobutane, methyl chloride, ethyl chloride, dichlorodifluoromethane (or other Freons), propylene, butylene, etc. Pentane or butane is preferred. The blowing agent is typically added during the final polymerization stage or stages or to the final polymerization product, optionally after recovery, washing, drying, etc. Mixtures of blowing agents can be used.

If desired, the particles may also be treated with a flame-retardant, e.g. hexabromocyclododecane, or they may be surface treated to attach other materials with a desired property, e.g. antistatic additives, or functional and reactive chemical groups.

Besides being useful for the preparation of EPS beads, the processes of invention may be used to produce polymer beads for many other applications. In particular, substantially monodisperse particles suitable for use as ion exchange resins (e.g. for water purification) may be prepared. Such resin beads will generally require some degree of cross-linking (e.g. with divinyl benzene) of the polymer matrix and may be derivatised after bead formation has occurred, e.g. by sulphonation by treatment with sulphuric acid to produce acidic ion exchange resin beads or by amination of a reactive comonomer used in the final stage or one of the later stages of polymerization, e.g. chloromethylstyrene, to produce a basic ion exchange resin. Such resins would have the advantage that with repeated use and flushing there would be a lesser tendency towards bead size separation occurring in the resin bed, a problem which leads to reduced performance. In general for ion exchange usage, bead sizes will be about 100 to 500 µm.

Further examples of applications include use as substrates for the generation of combinatorial chemistry libraries where the substantial monodispersity of the particles gives improved distribution of library members in library generation using split and mix techniques. For this application, the beads will generally be recited post production to introduce a surface functionality appropriate for attachment of the library members. Again bead sizes of 100 to 500 µm might typically be used.

The beads produced according to the invention may also be used as pigments for paints (e.g. to replace $TiO_2$), as spacers (e.g. in LCD's), as friction reducers, as lubricants, as carriers for cells, enzymes or catalysts, as carriers for drugs for sustained release formulations, as filters, as micro lenses, as carriers for additives for adhesives, as flow markers, or they may be thermoformed, e.g. by sintering, to produce filters or filter cakes with high uniformity of porosity.

For many of these uses, a degree of porosity is required for the particles, e.g. when they are for use as catalyst or enzyme carriers. This may be achieved relatively simply by controlling the degree of cross-linking of the polymer matrix and by including a porogen (e. g. toluene, pentane or any other volatile or gas generating agent which is non-reactive with the polymer) in the monomer emulsion used in the final stage or one of the later polymerization stages.

Where desired a porous particle may be loaded, e.g. with drug, catalyst, enzyme or the like, and then provided with a further polymer layer to seal in the load or to delay its release.

Porous particles may be used not simply as carriers but also as a source of controlled porosity in ceramics, polymer membranes, etc.

All documents referred to herein are hereby incorporated by reference.

The invention will now be described further with reference to the following non-limiting Examples.

Example 1

A 10L reactor was charged with 909g of an aqueous suspension of 80g 20 µm polystyrene Dynospheres®, 10.00g of cellulosic ether, and 5171g deionized water. The cellulosic ether was pre-dissolved in water the day beforehand.

The suspension was stirred at 170 rpm and heated to 80°C.

A styrene monomer emulsion was prepared by mixing 560g styrene, 933g water, 3.1g Berol 274 stabilizer, 0.52g Irganox 1330 inhibitor and 15.6g of dibenzoylperoxide. This was emulsified for 2 minutes in an Ultra Turrax mixer and added to the reactor over 7 hours at a rate of 1 mL/min (1 hour), 2.5 mL/min (2 hours), 4.5 mL/min (2 hours), 5 mL/min (1 hour) and 6 mL/min (1 hour). The reaction was allowed to continue for 2 hours after monomer emulsion addition was complete.

The product was recovered and analysed for particle size distribution (using a Coulter LS 130 counter).

| Mode | 43 µm |
|------|-------|
| CV | 2.2% |

Example 2

762g of an aqueous suspension of 80g of a seed produced in Example 1 was charged into a 10L reactor together with 10g cellulosic ether, and 5318g deionized water. Again the cellulosic ether had been dissolved in water the day beforehand.

The suspension was stirred at 170 rpm and heated to 80°C.

An emulsion was prepared using 560g styrene, 15.6g of dibenzoyl peroxide, 0.52g Irganox 1330, 3.1g Berol 274 and 933g water, emulsified for 2 minutes in an Ultra Turrax mixer. This was added to the stirred suspension in the reactor over 7 hours at a rate of 1 mL/min (1 hour), 2.5 mL/min (2 hours), 4.5 mL/min (2 hours), 5 mL/min (1 hour) and 6 mL/min (1 hour). The reaction was allowed to continue for 2 hours after monomer emulsion addition was complete. The product was recovered and analyzed.

| Mode | 83 µm |
|------|-------|
| CV | 3.2% |

Example 3

842g of an aqueous suspension of 80g of a seed from Example 2 was charged into a 10L reactor with 10g cellulosic ether and 5238g deionized water. The cellulosic ether had again been dissolved in water the day beforehand.

This was stirred at 150 rpm and heated to 80°C.

A styrene emulsion was prepared from 933g water, 3.1g Berol 274, 0.52g Irganox 1330, 15.6g of dibenzoyl peroxide and 640g styrene. The mixture was emulsified for 2 minutes using an Ultra Turrax mixer before being added to the reactor over 7 hours at a rate of 1 mL/min (1 hour), 2.5 mL/min (2 hours), 4.5 mL/min (2 hours), 5 mL/min (1 hour) and 6 mL/min (1 hour). The reaction was allowed to continue for 2 hours after monomer emulsion addition was complete. The product was then recovered and analysed.

| Mode | 170 µm |
|------|--------|
| CV | 9.2% |

Example 4

80g of a seed from Example 3 was charged into a 10L reactor with 4.8g cellulosic ether and 2400g deionized water. The cellulosic ether had again been dissolved in water beforehand.

This was stirred at 170 rpm and heated to 90°C.

A styrene emulsion was prepared from 1760g water, 12g Igepal CO-990, 0.6g Irganox 1330, 7.2g of dibenzoyl peroxide and 880g styrene. The mixture was emulsified for 2 minutes using an Ultra Turrax mixer before being added to the reactor over 13 hours at a rate of 1.25 mL/min (1 hour), 1.7 mL/min (1 hour), 2.5 mL (min (2 hours), 3.3 mL/min (2 hours), 4.2 mL/min (5 hours), 5.8 mL/min (1 hour) and 7 mL/min (1 hour). The monomer addition was halted overnight after 8 hours and resumed for the final 5 hours on the next day. The reaction was allowed to continue for 2 hours after monomer emulsion addition was complete. The product was then recovered and analysed. A sample of the product is shown in Figure 1 of the accompanying drawings.

| Mode | 367 µm |
|------|--------|

Example 5

20g of seed product comprising mode 230 µm, CV 8% polystyrene beads (prepared analogously to Examples 1 to 3, by a three step expansion from 20 µm polystyrene Dynospheres® in a first step to about 60 µm, in a second to about 120 µm and in the third step to 230 µm) was charged into a 1.5L reactor with 0.6g cellulosic ether (predissolved in water) and 300g deionized water. The mixture was stirred at 150 rpm and heated to 90°C.

A styrene emulsion was prepared from 185g water, 1.3g Igepal CO990, 70 mg Irganox 1330, 0.3g of dibenzoylperoxide and 92g styrene, emulsified for 2 minutes in an Ultra Turrax mixer. The emulsion was added to the reactor over 4 hours 40 minutes at 0.5 mL/min (1 hour), 0.7 mL/min (1 hour), 1.0 mL/min (1 hour) and 1.5 mL/min (100 minutes). Polymerization of the mixture was then allowed to continue for two hours. The product was recovered and analyzed.

| Mode | 404 µm |
|------|--------|
| CV | 10% |

Example 6

Example 5 was repeated but adding the emulsion over 6 hours at 0.5 mL/min (2 hours), 0.7 mL/min (1 hour) and 1.0 mL/min (3 hours). Polymerization of the mixture was then allowed to continue for two hours. The product was recovered and analyzed.

| Mode | 401 μm |
|------|--------|
| CV | 10% |

## Example 7

Example 5 was repeated but using a reaction temperature of 95°C. Polymerization of the mixture was then allowed to continue for two hours. The product was recovered and analyzed.

| Mode | 402 μm |
|------|--------|
| CV | 9% |

## Example 8

An aqueous suspension of 50g of a polystyrene seed of mode diameter 399 μm (CV 8.4%) (e.g. as produced in Examples 5 to 7) in 1500g water with 1.0g of a cellulosic ether was charged into a 3L glass reactor with a double spiral stirrer. The mixture was stirred at 150 rpm and heated to 90°C.

A styrene emulsion was prepared from 400g water, 0.8g Tween 20, 1.0g dibenzoylperoxide and 200g styrene, emulsified for two minutes in an Ultra Turrax mixture. The emulsion was added to the reactor over 11 hours at a rate of 0.8 mL/min. Polymerization was allowed to continue for two further hours. The product was recovered and analysed.

| Mode | 635 μm |
|------|--------|
| CV | 8.4% |

## Example 9

An aqueous suspension of 50g of a polystyrene seed of mode diameter 635 μm (from Example 8) in 750g water with 0.35g of a cellulosic ether was charged into a 3L glass reactor with a double spiral stirrer. The mixture was stirred at 150 rpm and heated to 90°C.

A styrene emulsion was prepared from 600g water, 1.2g Tween 20, 3.0g dibenzoylperoxide and 300g styrene, emulsified for two minutes in an Ultra Turrax mixture. The emulsion was added to the reactor over 9 hours at 0.6 mL/min (2 hours) and 0.9 mL/min (7 hours). Polymerization was allowed to continue for two further hours. The product was recovered and analysed.

| Mode | 980 μm |
|------|--------|
| CV | 9.8% |

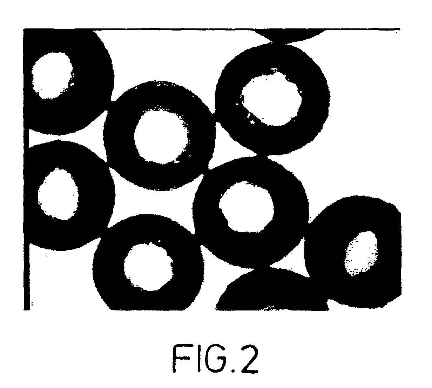

A light microscope image of the product is shown in Figure 2 hereto.

## Example 10

A 3500 L reactor was charged with 518·kg of an aqueous suspension of 50 kg 37 μm polystyrene Dynoseeds (prepared analogously to Example 1), 10 kg cellulosic ether and 1300 kg deionized water. The cellulosic ether was pre-dissolved in the water.

The suspension was stirred at 25 rpm and heated up to 90°C.

A styrene monomer emulsion was prepared by mixing 350 kg styrene, 3.5 kg of dibenzoylperoxide, 1.5 kg Tween 20 stabilizer and 700 kg water. This was emulsified for 10 minutes with a Dispermixer and added to the reactor over 14 hours at 11, 17, 28, 37, 46, 59, 59, 77, 84, 86, 115, 130, 113 and 144 kg/hour for one hour each. The emulsion was re-emulsified every hour:

The stirring rate during the reaction was between 18 and 40 rpm depending the volume in the reactor.

The reaction was allowed to continue for 7 hours after monomer addition was complete.

The product was recovered and analysed for particle size distribution.

| Mode | 73.4 μm |
|------|---------|
| CV | 3.95% |

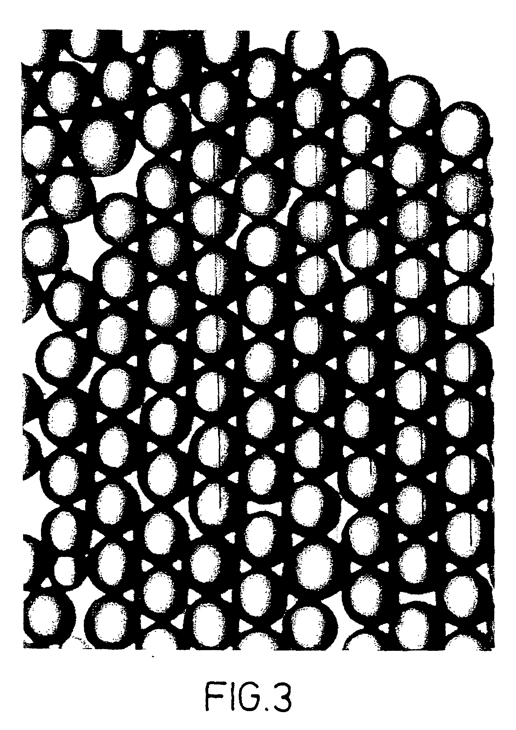

A light microscope image of the product is shown in Figure 3 hereto.

## Claims

1. A process for the preparation.of polymer particles of a first mode size which is in the range 200 to 3000 μm, which process comprises:

    (a) obtaining a first substantially monodisperse particulate polymer seed material having a mode size of no more than 100 μm;
    (b) using said first seed material, performing a suspension polymerization to yield a second substantially monodisperse particulate polymer seed material having a mode size greater than that of said first seed material and not more than 150 μm and isolating said second seed material;
    (c) using said second seed material, performing a suspension polymerization to yield a third substantially monodisperse particulate polymer seed material having a mode size greater than that of said second seed material and not more than 1000 μm and isolating said third seed material;

(d) using said third seed material or a seed material derived therefrom by further suspension polymerization, performing a suspension polymerization to yield polymer particles of said first mode size; and

(e) optionally impregnating and/or heat treating and/or surface modifying the particulate product of step (d).

2. A process as claimed in claim 1 wherein said polymer particles are polystyrene particles.

3. A process as claimed in either of claims 1 and 2 wherein the coefficient of variation of said seed material is less than 12%.

4. A process as claimed in claim 3 wherein the coefficient of variation of said first seed material is less than 12%.

5. A process as claimed in any one of claims 1 to 4 wherein the successive suspension polymerization steps involve a mean particle size expansion of from 1.4 to 3 in at least one of said steps.

6. A process as claimed in claim 5 wherein said suspension polymerization steps each involve a mean particle size expansion of from 1.4 to 3.

7. A substantially monodisperse particulate polymer material having a mode particle size of between 60 and 400 $\mu$m and a CV of less than 12%.

8. A polymer material as claimed in claim 7 being a polystyrene.

9. A polymer material as claimed in any one of claims 7 or 8 having a mode particle size of at least 200 $\mu$m.

10. A polymer as claimed in any one of claims 7 to 9 produced from a seed polymer produced by the Sintef process.

11. A process for the preparation of polymer particles by successive seeded suspension polymerization steps, **characterised in that** as seeds are used polymer particles having a CV of less than 12% and a mode particle size of between 60 and 1000 $\mu$m and **in that** polymerization is so effected that the ratio of the mode particle size of the seeds to that of the suspension polymerization product is in the range 1:1.4 to 1:3.

12. A process as claimed in claim 11 wherein said ratio is in the range 1:1.58 to 1:2.72.

13. A process as claimed in either of claims 11 and 12 wherein said polymer is a polystyrene.

**Patentansprüche**

1. Verfahren zur Erzeugung von Polymer-Partikeln einer ersten Grössen-Verteilung im Bereich von 200 bis 3000 $\mu$m **gekennzeichnet durch** die Verfahrensschritte:

(a) Erzeugung eines ersten weitgehend monodispersen Polymer-Partikel-Saatmaterials mit einer Grössen-Verteilung von nicht mehr als 100 $\mu$m;

(b) Verwendung des ersten Saatmaterials zur Durchführung einer Suspensions-Polymerisation, um ein zweites weitgehend monodisperses Polymer-Partikel Saatmaterial zu erhalten mit einer Grössen-Verteilung, die grösser ist als die Grössen-Verteilung des ersten Saatmaterials und nicht grösser ist als 150 $\mu$m, und Isolierung des zweiten Saatmaterials;

(c) Verwendung des zweiten Saatmaterials zur Durchführung einer Suspensions-Polymerisation, um ein drittes weitgehend monodisperses Polymer-Partikel Saatmaterial zu erhalten mit einer Grössen-Verteilung, die grösser ist als die Grössen-Verteilung des zweiten Saatmaterials und nicht grösser ist als 1000 $\mu$m, und Isolierung des dritten Saatmaterials;

(d) Verwendung des dritten Saatmaterials oder eines Saatmaterial-Derivates davon, erzeugt **durch** weitere Suspensions-Polymerisation, zur Durchführung einer Suspensions-Polymerisation, um Polymer-Partikel der ersten Grössen-Verteilung zu erhalten; und

(e) Optionales Imprägnieren und / oder Wärmebehandeln und / oder Oberflächen-Modifizierung des Partikelproduktes aus dem Verfahrens-Schritt (d).

2. Verfahren nach Anspruch 1 **dadurch gekennzeichnet, dass** die Polymer-Partikel Polystyren-Partikel sind.

3. Verfahren nach einem der Ansprüche 1 oder 2 **dadurch gekennzeichnet, dass** der Variations-Koeffizient des Saatmaterials kleiner ist als 12 %.

4. Verfahren nach Anspruch 3 **dadurch gekennzeichnet, dass** der Variations-Koeffizient des ersten Saatmaterials kleiner ist als 12 %.

5. Verfahren nach einem der Ansprüche 1 bis 4 **dadurch gekennzeichnet, dass** die aufeinander folgenden Suspensions-Polymerisations-Schritte eine durchschnittliche Vergrösserung der Partikelgrössen von 1,4 bis 3 in mindestens einem der Verfahrensschritte beinhaltet.

6. Verfahren nach Anspruch 5 **dadurch gekennzeichnet, dass** jeder der Suspensions-Polymerisations-Schritte eine durchschnittliche Vergrösserung der Partikelgrössen von 1,4 bis 3 beinhalten.

7. Weitgehend monodisperses Polymer-Partikel-Material mit einer Partikel-Grössen-Verteilung zwischen 60 und 400 μm und einem Variations-Koeffizienten von weniger als 12 %.

8. Polymermaterial nach Anspruch 7 **dadurch gekennzeichnet, dass** das Polymermaterial Polystyren ist.

9. Polymermaterial nach einem der Ansprüche 7 oder 8 **dadurch gekennzeichnet, dass** das Polymermaterial eine Partikel-Grössen-Verteilung von mindestens 200 μm besitzt.

10. Polymermaterial nach einem der Ansprüche 7 bis 9 **dadurch gekennzeichnet, dass** das Polymermaterial aus einem durch den SINTEF-Prozess erzeugten Saat-Polymer-Material erzeugt wird.

11. Verfahren zur Erzeugung von Polymerpartikeln durch aufeinander folgende Saatsuspensions Polymerisationsschritte **dadurch gekennzeichnet, dass** als Saatmaterial Polymerpartikel mit einem Variationskoeffizienten von weniger als 12 % und einer Partikel-Grössen-Verteilung zwischen 60 und 1000 μm verwendet werden; und dass die Polymerisation so effizient ist, dass das Verhältnis der Partikel-Grössen-Verteilung des Saatmaterials zu dem des Suspesions Polvmerisations Produktes im Bereich von 1:1,4 bis 1:3 liegt.

12. Verfahren nach Anspruch 11 dadurch gekennzeichet dass das verhältnis im Bereich von 1:1.58 bis 1:2.72 liegt.

13. Verfahren nach einem der Ansprüche 11 oder 12 dadurch gekennzeichet dass das polymermaterial polystyrene ist.

**Revendications**

1. Procédé de préparation de particules de polymère d'une première dimension modale qui est dans la plage de 200 à 3000 μm, lequel procédé comprend :

   (a) l'obtention d'une première matière d'ensemencement polymère particulaire sensiblement monodispersée ayant une dimension modale ne dépassant pas 100 μm ;

   (b) avec ladite première matière d'ensemencement, la conduite d'une polymérisation en suspension pour produire une seconde matière d'ensemencement polymère particulaire sensiblement monodispersée ayant une dimension modale supérieure à celle de ladite première matière d'ensemencement et ne dépassant pas 150 μm et l'isolement de ladite seconde matière d'ensemencement ;

   (c) avec ladite seconde matière d'ensemencement, la conduite d'une polymérisation en suspension pour produire une troisième matière d'ensemencement polymère particulaire sensiblement monodispersée ayant une dimension modale supérieure à celle de ladite seconde matière d'ensemencement et ne dépassant pas 1000 μm et l'isolement de ladite troisième matière d'ensemencement ;

   (d) avec ladite troisième matière d'ensemencement ou une matière d'ensemencent dérivée de celle-ci par une autre polymérisation en suspension, la conduite d'une polymérisation en suspension pour produire des particules de polymère de ladite première dimension modale ; et

   (e) éventuellement l'imprégnation et/ou le traitement thermique et/ou la modification superficielle du produit particulaire de l'étape (d).

2. Procédé selon la revendication 1 où lesdites particules de polymère sont des particules de polystyrène.

3. Procédé selon l'une quelconque des revendications 1 et 2 où le coefficient de variation de ladite matière d'ensemencement est inférieur à 12 %.

4. Procédé selon la revendication 3 où le coefficient de variation de ladite première matière d'ensemencement est inférieur à 12 %.

5. Procédé selon l'une quelconque des revendications 1 à 4 où les étapes successives de polymérisation en suspension comprennent une expansion de la dimension de particule moyenne de 1,4 à 3 dans au moins l'une desdites étapes.

6. Procédé selon la revendication 5 où lesdites étapes de polymérisation en suspension comprennent chacune une expansion de la dimension de particule moyenne de 1,4 à 3.

7. Matière polymère particulaire sensiblement monodispersée ayant une dimension de particule modale entre 60 et 400 μm et un CV inférieur à 12 %.

8. Matière polymère selon la revendication 7 qui est un polystyrène.

9. Matière polymère selon l'une quelconque des revendications 7 ou 8 ayant une dimension de particule modale d'au moins 200 μm.

10. Polymère selon l'une quelconque des revendications 7 à 9 produit à partir d'un polymère d'ensemencement produit par le procédé Sintef.

11. Procédé de préparation de particules de polymère par des étapes successives de polymérisation en suspension ensemencée, **caractérisé en ce que** des particules de polymère ayant un CV inférieur à 12 % et une dimension de particule modale entre 60 et 1000 μm sont utilisées comme germes et **en ce que** la polymérisation est conduite de telle manière que le rapport de la dimension de particule modale des germes à celle du produit de la polymérisation en suspension est dans la plage de 1 : 1,4 à 1 : 3.

12. Procédé selon la revendication 11 où le rapport est dans la plage de 1:1.58 à 1:2.72.

13. Procédé selon l'une quelconque des revendications 11 et 12 où la polymère est un polystyrène.

FIG.1

FIG.2

FIG.3